# EUROPÄISCHE PATENTSCHRIFT

(11) **EP 1 765 661 B1**
(45) Veröffentlichungstag und Bekanntmachung des Hinweises auf die Patenterteilung: **19.03.2008**
(21) Anmeldenummer: 05752715.2
(22) Anmeldetag: 18.06.2005
(51) Int. Cl.: B62J 9/00

(54) **SEITENKOFFER FÜR MOTORRÄDER**
SIDE BAG FOR MOTORCYCLES
COFFRE LATERAL POUR MOTOCYCLETTE

(30) Priorität: 09.07.2004 DE 102004033688
(43) Veröffentlichungstag der Anmeldung: 28.03.2007
(73) Patentinhaber: Bayerische Motorenwerke Aktiengesellschaft, 80809 München (DE)
(72) Erfinder: ROTH, Ingo, 85356 Freising (DE)
(86) Internationale Anmeldenummer: PCT/EP2005/006606
(87) Internationale Veröffentlichungsnummer: WO 2006/005414

(56) Entgegenhaltungen:
- DE-U1- 9 420 745
- GB-A- 734 278
- US-A- 5 497 919

## Beschreibung

Die vorliegende Erfindung betrifft einen Seitenkoffer für Zweiräder gemäß dem Oberbegriff des Patentanspruches 1.

Ein derartiger Seitenkoffer zur Verwendung im Zusammenhang mit Fahrrädern ist aus der US 5 497 919 bekannt. Gepäckbehälter zur seitlichen Anbringung an einem Zweirad sind ferner aus der GB 734 278 bekannt.

Die meisten Motorradseitenkoffer sind aus zwei im Spritzgussverfahren hergestellten Kofferschalen aufgebaut. Sie haben also ein fest vorgegebenes Volumen. Bei nur teilweiser Beladung kann das im Koffer befindliche Ladegut zu Klappergeräuschen führen und verrutschen, was die Fahrstabilität beeinträchtigen kann. Ein weiterer Nachteil von Seitenkoffern mit fest vorgegebenem, d. h. nicht verstellbaren Ladevolumen ist darin zu sehen, dass auch bei geringer Beladung immer mit maximalem Luftwiderstand gefahren werden muss.

Alternativ dazu gibt es auch seitlich am Motorradheck anbringbare Gepäckbehälter, die aus Leder oder aus Textil hergestellt sind. Derartige Gepäckbehälter haben jedoch eine geringe Steifigkeit, eine relativ begrenzte Zuladung und bieten nur einen geringen Schutz gegen Diebstahl. Darüber hinaus verformen sie sich durch das Gewicht des Ladeguts und durch Windkräfte, was die Fahrstabilität ungünstig beeinflussen kann.

Aufgabe der Erfindung ist es, einen volumenvariablen Seitenkoffer für Motorräder zu schaffen, bei dem die oben genannten Nachteile vermieden werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Seitenkoffer für Motorräder aus, der ein Kofferinnenteil und ein Kofferaußenteil aufweist. Wenn der Seitenkoffer im seitlichen Bereich des Motorradhecks montiert ist, ist das Kofferinnenteil dem Motorrad zugewandt und das Kofferaußenteil dem Motorrad abgewandt. Zum Öffnen und Schließen des Seitenkoffers kann das Kofferaußenteil in Bezug auf das Kofferinnenteil verschwenkt werden.

Der Kern der Erfindung besteht darin, dass zwischen dem Kofferinnenteil und dem Kofferaußenteil ein "flexibles Kofferzwischenteil" angeordnet ist. Bei geschlossenem Seitenkoffer verbindet das Kofferzwischenteil das Kofferinnenteil mit dem Kofferaußenteil. Aufgrund der Flexibilität des Kofferzwischenteils kann das Ladevolumen des Seitenkoffers dem tatsächlichen Volumen des Ladeguts angepasst werden. Bei minimaler Beladung sind die innere und die äußere Kofferhälfte nahezu ganz zusammengeklappt, d. h. das Kofferaußenteil liegt im wesentlichen unmittelbar an dem Kofferinnenteil an. Wenn ein größeres Ladevolumen benötigt wird, können das Kofferinnenteil und das Kofferaußenteil je nach Bedarf auseinandergeschwenkt werden. Der "Zwischenraum" zwischen dem Kofferinnenteil und dem Kofferaußenteil wird durch das flexible Kofferzwischenteil "überbrückt". Das Kofferzwischenteil kann aus einem relativ flexiblen "folienartigen Material", einem Stoff- bzw. Textilmaterial, insbesondere einem beschichteten Stoff- bzw. Textilmaterial o.ä. gebildet und an das Kofferaußenteil angenäht oder in sonstiger Weise mit dem Kofferaußenteil verbunden sein, z.B. durch Kleben. Ähnlich wie bei einem Faltenbalg kann das Kofferzwischenteil vorgefaltet sein. Eine faltenbalgähnliche "Vorfaltung" ist aber nicht zwingend erforderlich.

Um den Seitenkoffer während der Fahrt geschlossen zu halten, ist mindestens ein Spannelement vorgesehen. Vorzugweise sind zwei Spannelemente vorgesehen, die sich vom Kofferaußenteil über das Kofferzwischenteil zu einem oberen Bereich des Kofferinnenteils erstrecken und das Kofferaußenteil und das Kofferinnenteil zusammenspannen. Die Spannelemente können die Form von Spanngurten haben. Das eine Spannelement kann in einem vorderen Bereich des Seitenkoffers und das andere Spannelement in einem hinteren Bereich des Seitenkoffers angeordnet sein. Je nach Ladevolumenbedarf befinden sich das Kofferinnenteil und das Kofferaußenteil in unterschiedlichen Schwenkstellungen zueinander. Die Länge der Spannelemente und das Kofferzwischenteil sind entsprechend aufeinander abgestimmt. Bei großem Ladevolumenbedarf müssen die Spannelemente eine größere Spannlänge überbrücken als bei kleinem Ladevolumenbedarf. Hierzu sind die Spannelemente in ihrer Länge ausziehbar, was später noch näher erläutert wird.

An dem Kifferinnenteil sind Aufnahmeöffnungen vorgesehen, in welche die das Spannelemente eingeführt werden können. An den dem Kifferinnenteil zugewandten Enden der Spannelemente sind klinkenartige Elemente vorgesehen. Sie können in die am Kofferinnenteil vorgesehenen Aufnahmeöffnungen eingeführt und in darin vorgesehene Rasteinrichtungen eingerastet werden.

Wie bereits erwähnt können die Spannelemente eine gurtähnliche bzw. eine bandähnliche Form haben. Vorzugsweise handelt es sich bei den Spannelementen um relativ flache "Kunststoffbänder", die durch eingespritzte Seile verstärkt sind. Bei den Seilen kann es sich beispielsweise um Stahlseile handeln. Dadurch können sehr hohe Zug- bzw. Spannkräfte übertragen werden.

Das Kofferinnenteil kann ähnlich wie bei herkömmlichen Seitenkoffern als "tragende Kunststoffschale" ausgebildet sein. Das Kofferaußenteil kann ebenfalls aus Kunststoff hergestellt sein. Alternativ dazu kann das Kofferaußenteil aus einem Textilmaterial herstellt sein. Vorzugsweise weist das Kofferaußenteil eine geringere Steifigkeit als das Kofferinnenteil auf, so dass es leicht von Hand verformt werden kann. Das Kofferzwischenteil weist im Vergleich zu dem Kofferinnenteil und dem Kofferaußenteil eine geringe Steifigkeit auf. Es ist also relativ flexibel. Es kann z. B. aus Kunststoff oder aus einem Textilmaterial hergestellt sein.

Vorzugsweise ist das flexible Kofferzwischenteil durch eine "Armierung" verstärkt. Bei der Armierung kann es sich beispielsweise um eine Drahtseileinlage, um ein Drahtgewebe bzw. ein Drahtgeflecht handeln, das integraler Bestandteil des Kofferzwischenteils ist. Wenn das Kofferzwischenteil aus Kunststoff hergestellt ist, kann die Armierung in das Kofferzwischenteil eingespritzt bzw. eingegossen sein. Wenn das Kofferzwischenteil aus einem Textil hergestellt ist, kann die Armierung in das Textil eingewoben sein oder flächig mit der Innenseite des Kofferzwischenteils verbunden sein, z. B. durch Verkleben oder Vernähen. Durch die Armierung wird die Gefahr einer Beschädigung des Kofferzwischenteils verringert. Außerdem verbessert sich dadurch die Diebstahlsicherheit, da das Kofferzwischenteil nicht ohne weiteres aufgeschlitzt bzw. aufgerissen werden kann.

Aus Designgründen sollte sich das Kofferaußenteil im Gebrauch nicht bzw. nur im begrenztem Umfang vorformen. Um die "Stabilität" des Kofferaußenteils zu verbessern, kann an einer Außenseite des Kofferaußenteils ein Verstärkungselement angeordnet sein, welches das Kofferaußenteil von außen her teilweise umgreift. Das Verstärkungselement kann aus Kunststoff hergestellt sein. Vorzugweise weist das Verstärkungselement zwei "gurtähnliche Abschnitte" auf, die sich von einer Unterseite des Kofferaußenteils nach oben zu einer Oberseite des Kofferaußenteils erstrecken. Im oberen Bereich des Kofferaußenteils sind die gurtähnlichen Abschnitte des Verstärkungselements jeweils mit einem der Spannelemente verbunden. Die gurtähnlichen Abschnitt können also als "verlängerte" Spannelemente interpretiert werden. Die Spannelemente können an ihrer dem Kofferaußenteil bzw. dem Kofferzwischenteil zugewandten Seite eine Rasterung aufweisen, z. B. ähnlich einer Zahnreihe, wie sie von Zahnstangen bekannt ist. An der Innenseite der gurtähnlichen Abschnitte können Rasteinrichtungen, z. B. Rastklinken vorgesehen sein, in die die Rasterungen der Spannelemente einrastbar sind. Dadurch sind die Spannelemente "längenverstellbar" mit den gurtähnlichen Abschnitten verbunden.

Um die Stabilität des Kofferaußenteils weiter zu verbessern, kann das Verstärkungselement einen gurtähnlichen Abschnitt aufweisen, der sich quer zu den beiden erstgenannten gurtähnlichen Abschnitten von einer Rückseite des Kofferaußenteils zu einer Vorderseite des Kofferaußenteils nach vorne erstreckt. Sofern das Verstärkungselement ein Kunststoffspritzgussteil ist, können die beiden nach oben verlaufenden gurtähnlichen Abschnitte einstückig durch den sich in Längsrichtung des Seitenkoffers erstreckenden gurtähnlichen Abschnitt miteinander verbunden sein. Vorzugsweise ist das Verstärkungselement starr, insbesondere starrer als das Kofferaußenteil.

Wie bereits erwähnt, kann zum Öffnen bzw. Schließen des Seitenkoffers das Kofferaußenteil gegenüber dem Kofferinnenteil verschwenkt werden. Hierzu kann das Kofferaußenteil über ein Scharnier unmittelbar mit dem Kofferinnenteil verbunden sein. Alternativ oder ergänzend dazu kann auch vorgesehen sein, dass das bzw. die Scharniere am unteren Ende der gurtähnlichen Abschnitte des Verstärkungselements angeordnet sind.

Im folgenden wird die Erfindung im Zusammenhang mit der Zeichnung näher erläutert. Es zeigen:
- Figur 1: einen Seitenkoffer gemäß der Erfindung in aufgeklapptem Zustand;
- Figur 2: den Seitenkoffer der Figur 1 in geschlossenem Zustand; und
- Figur 3: eine Seitenansicht des Seitenkoffers der Figuren 1 und 2.

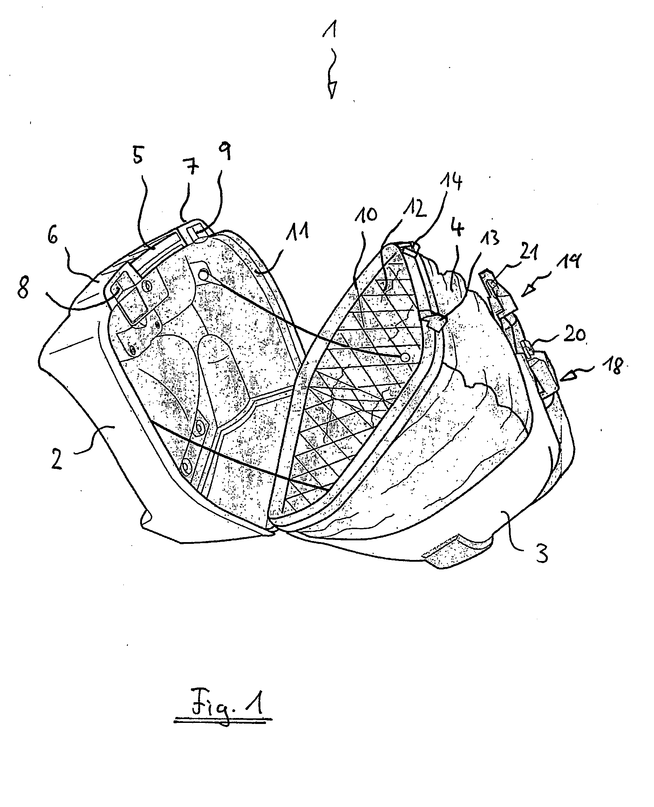

Figur 1 zeigt einen Seitenkoffer 1, der ein Kofferinnenteil 2, ein Kofferaußenteil 3 und ein Kofferzwischenteil 4 aufweist. Wenn der Seitenkoffer 1 seitlich im Heckbereich am Motorrad montiert ist, ist das Kofferinnenteil 2 dem Motorrad zugewandt und das Kofferaußenteil 3 dem Motorrad abgewandt. Das Kofferinnenteil 2 ist eine im wesentlichen starre Kunststoffschale, an deren Oberseite ein Griff 5 vorgesehen ist. An der Oberseite des Kofferinnenteils 2 sind Aufnahmeöffnungen 6, 7 vorgesehen, in denen eine erste bzw. zweite Rasteinrichtung 8, 9 angeordnet ist.

Das Kofferzwischenteil 4 besteht aus einem kunststoffbeschichteten, wasserdichten Textilmaterial, das relativ flexibel ist. An der dem Kofferinnenteil 2 zugewandten Seite weist das Kofferzwischenteil 4 einen vergleichsweise starren Rahmen 10 auf, dessen Form der Form des Kofferinnenteils 2 in einem äußeren Randbereich 11 entspricht. Das Kofferzwischenteil 4 ist durch ein Drahtnetz 12 verstärkt. Das Drahtnetz 12 kann in das Gewebe des Kofferzwischenteils 4 eingewebt oder auf die Innenseite des Kofferzwischenteils 4 aufgeklebt sein. Das Drahtgewebe 12 fungiert als Armierung. An der Oberseite des Rahmens 10 des Kofferzwischenteils 4 sind zwei Rasthaken 13, 14 vorgesehen, die in die Rasteinrichtungen 8, 9 eingeführt werden können.

Wie aus Figur 1 ersichtlich ist, ist das äußere Ende des Kofferzwischenteils 4 fest mit dem Kofferaußenteil 3 verbunden. Es kann z. B. an das Kofferaußenteil 3 angenäht sein.

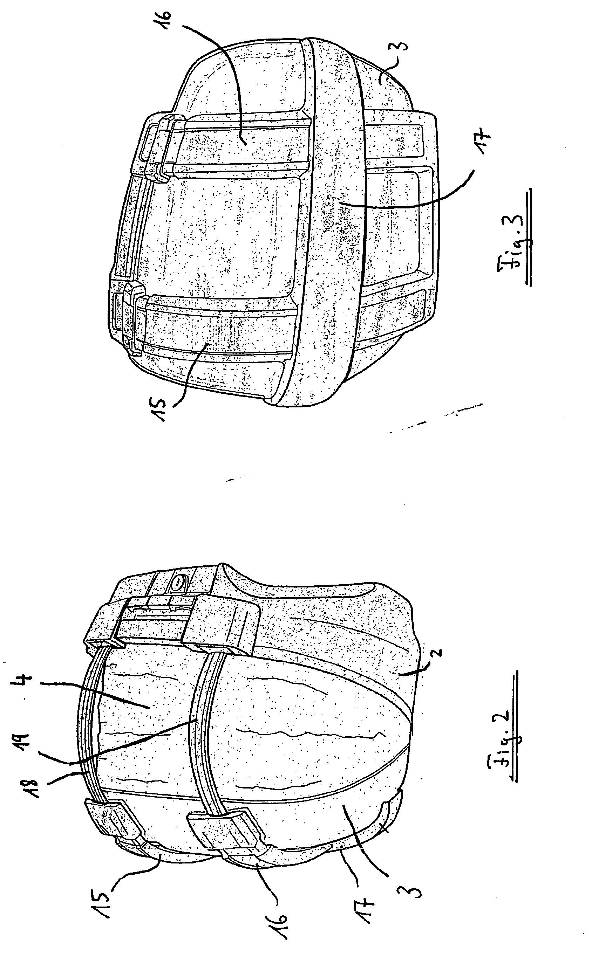

Wie am Besten aus den Figuren 2 und 3 ersichtlich ist, ist an der Außenseite des Kofferaußenteils 3 ein Verstärkungselement vorgesehen, das einen ersten und einen zweiten gurtähnlichen Abschnitt 15, 16 und einen Querabschnitt 17 aufweist. Die gurtähnlichen Abschnitte 16, 17 erstrecken sich jeweils von einer Unterseite des Kofferaußenteils 3 bis in den Bereich der Oberseite des Kofferaußenteils 3. Der Querabschnitt 17 verbindet die beiden gurtähnlichen Abschnitte 15, 16 und erstreckt sich von einer Rückseite in Längsrichtung des Seitenkoffers 1 nach vorne zu dessen Vorderseite. Das Verstärkungselement mit seinen gurtähnlichen Abschnitten 15, 16 und dem Querabschnitt 17 ist aus Kunststoff hergestellt. Es umgreift das Kofferaußenteil 3 von außen her klammerartig und hält dadurch das Kofferaußenteil 3 in Form. Die gurtähnlichen Abschnitte 15, 16 sind vom Kofferaußenteil 3 aus gesehen konkav. Ihre konkave Innenseiten, bilden jeweils einen "Aufnahmekanal" für Enden zugeordneter gurtähnlicher Spannelemente 18, 19. Die Spannelemente 18, 19 weisen in ihrer Längsrichtung eine Rasterung auf, z.B. eine Zahnreihe. Die Enden der Spannelemente 18, 19 sind in zugeordnete Rasteinrichtungen eingeführt, die an der dem Kofferaußenteil zugewandten Innenseite der gurtähnlichen Abschnitte 15, 16 angeordnet sind. Die Rasteinrichtungen ermöglichen eine Relativverschiebung der Spannelemente 18, 19 in Bezug auf die gurtähnlichen Abschnitte 15, 16 und damit eine bedarfsgerechte "Längenverstellung" der Spannelemente 18, 19, entsprechend dem jeweiligen Ladevolumenbedarf.

In der in Figur 1 gezeigten Öffnungsstellung des Seitenkoffers 1 sind die Spannelemente 18, 19 in die Aufnahmekanäle der gurtähnlichen Abschnitte 15, 16 eingeschoben. Wenn der Seitenkoffer 1 geschlossen werden soll, wird das Kofferaußenteil 3 in Richtung des Kofferinnenteils 2 geklappt. Dabei rasten zunächst die Rasthaken 13, 14 in die Rasteinrichtungen 8, 9 ein. Anschließend werden klinkenartige Elemente 20, 21 (vgl. Fig. 1), die an Enden der Spannelemente 18, 19 vorgesehen sind, in die Rasteinrichtungen eingerastet, wodurch der Seitenkoffer 1 "verriegelt" wird. Anschließend kann das Kofferaußenteil 3 noch in Richtung des Kofferinnenteils 2 gedrückt werden, wobei die an den Spannelementen 18, 19 vorgesehenen Zahnreihen (nicht dargestellt), ratschenartig über die an den gurtähnlichen Abschnitten 15, 16 vorgesehenen Rasteinrichtungen rutschen. Der Seitenkoffer 1 kann also auf das tatsächlich benötigte Ladevolumen zusammengeschoben werden. Zum Öffnen des Seitenkoffers 1 ist an der Oberseite des Kofferinnenteils 2 eine hier nicht näher dargestellte "Entriegelung" vorgesehen, über welche die Rasteinrichtungen 8, 9 entriegelt werden können.

## Patentansprüche

1. Seitenkoffer (1) für Zweiräder, mit
einem Kofferinnenteil (2), das in einem montierten Zustand dem Zweirad zugewandt ist,
einem Kofferaußenteil (3), das in einem montierten Zustand dem Zweiradrad abgewandt ist und das zum Öffnen und Schließen des Seitenkoffers schwenkbar in Bezug auf das Kofferinnenteil (2) ist, wobei zwischen dem Kofferinnenteil (2) und dem Kofferaußenteil (3) ein Kofferzwischenteil (4) angeordnet ist, das aus einem flexiblen Material hergestellt ist,
**dadurch gekennzeichnet,**
**dass** es sich um einen Seitenkoffer für Motorräder handelt,
**dass** das Kofferinnenteil (2) und das Kofferaußenteil (3) schalenförmig ausgebildet sind.

2. Seitenkoffer (1) nach Anspruch 1, wobei im geschlossenem Zustand des Seitenkoffers (1) das Kofferaußenteil (3) durch mindestens ein Spannelement (18, 19) gegen das Kofferinnenteil (2) gespannt ist, wobei sich das mindestens eine Spannelement (18, 19) vom Kofferaußenteil (3) über das Kofferzwischenteil (4) zu einem oberen Bereich des Kofferinnenteils (2) erstreckt.

3. Seitenkoffer (1) nach Anspruch 2, wobei ein vorderes und ein hinteres Spannelement (18, 19) vorgesehen ist.

4. Seitenkoffer (1) nach Anspruch 3, wobei das Kofferinnenteil Rasteinrichtungen (6, 7) aufweist, in die klinkenartige Elemente (20, 21), die an den Enden der Spannelemente (18, 19) vorgesehen sind, einrastbar sind.

5. Seitenkoffer (1) nach einem der Ansprüche 2 bis 4, wobei das mindestens eine Spannelement (18, 19) eine gurtähnliche Form hat.

6. Seitenkoffer (1) nach Anspruch 5, wobei das mindestens eine Spannelement (18, 19) aus Kunststoff besteht, wobei in den Kunststoff mindestens ein Stahlseil eingelagert ist.

7. Seitenkoffer (1) nach einem der Ansprüche 1 bis 6, wobei das Kofferzwischenteil (4) eine Armierung aufweist.

8. Seitenkoffer (1) nach Anspruch 7, wobei die Armierung durch ein Drahtseilgeflecht bzw. ein Drahtseilgewebe gebildet ist.

9. Seitenkoffer (1) nach einem der Ansprüche 1 bis 7, wobei das Kofferinnenteil (2) eine im wesentliche starre Kunststoffschale aufweist.

10. Seitenkoffer (1) nach einem der Ansprüche 1 bis 9, wobei das Kofferaußenteil (3) aus einem elastischen Material besteht, jedoch steifer ist als das Kofferzwischenteil (4).

11. Seitenkoffer (1) nach einem der Ansprüche 1, wobei das Kofferzwischenteil aus einem Textilmaterial besteht.

12. Seitenkoffer (1) nach einem der Ansprüche 1 bis 11, wobei das Kofferaußenteil (3) aus einem Textilmaterial besteht.

13. Seitenkoffer (1) nach einem der Ansprüche 1 bis 12, wobei das Kofferzwischenteil (4) über ein Scharnier mit schwenkbar mit dem Kofferinnenteil (2) verbunden ist.

14. Seitenkoffer (1) nach einem der Ansprüche 1 bis 12, wobei an einer Außenseite des Kofferaußenteils (3) ein Verstärkungselement (15, 17) angeordnet ist, welches das Kofferaußenteil (3) von außen her klammerartig umgreift.

15. Seitenkoffer (1) nach Anspruch 14, wobei das Verstärkungselement (15 - 17) über mindestens ein Scharnier mit dem Kofferinnenteil (2) verbunden ist.

16. Seitenkoffer (1) nach einem der Ansprüche 14 oder 15, wobei das Verstärkungselement (15-17) zwei gurtähnliche Abschnitte (15, 16) aufweist, die sich von einer Unterseite des Kofferaußenteils (3) nach oben zu einer Oberseite des Kofferaußenteils (3) erstrecken.

17. Seitenkoffer (1) nach Anspruch 16, wobei die beiden gurtähnlichen Abschnitte (15, 16) vom Kofferzwischenteil (4) aus gesehen konkav sind und Aufnahmekanäle bilden, in die jeweils eines der Spannelemente (18, 19) eingeführt ist.

18. Seitenkoffer (1) nach Anspruch 17, wobei an Enden der Spannelemente (18, 19), die aus den durch die gurtähnlichen Abschnitte (15, 16) gebildeten Aufnahmekanälen herausragen, klinkenartige Elemente (20, 21) vorgesehen sind, die in die Rasteinrichtungen (6, 7) des Kofferinnenteils (2) einrastbar sind.

19. Seitenkoffer (1) nach einem der Ansprüche 14 bis 18, wobei das Verstärkungselement (15 - 17) einen gurtähnlichen Abschnitt aufweist, der sich quer zu den beiden anderen gurtähnlichen Abschnitten (15, 16) von einer Rückseite zu einer Vorderseite des Kofferaußenteils (3) nach vorne erstreckt.

20. Seitenkoffer (1) nach einem der Ansprüche 14 bis 19, wobei die gurtähnlichen Abschnitte (15 -17) aus Kunststoff sind.

21. Seitenkoffer (1) nach einem der Ansprüche 16 bis 20, wobei die gurtähnlichen Abschnitte (15- 17) starrer als das Kofferaußenteil (3) sind.

## Claims

1. A side box or trunk (1) for two-wheeled vehicles, comprising
an inner part (2) which when assembled faces the two-wheeled vehicle, an outer part (3) which when assembled faces away from the two-wheeled vehicle and is pivotable relative to the inner part (2) in order to open and close the box, wherein a middle part (4) made of a flexible material is provided between the inner part (2) and the outer part (3),
**characterised in that**
the side box is for motorcycles, and
the inner part (2) and the outer part (3) are dish-shaped.

2. A side box (1) according to claim 1, wherein when the side box (1) is closed the outer part (3) is clamped against the inner part (2) by at least one clamping element (18, 19), wherein the at least one clamping element (18, 19) extends from the outer part (3) over the middle part (4) to a top region of the inner part (2).

3. A side box (1) according to claim 2, wherein a front and a rear clamping element (18, 19) are provided.

4. A side box (1) according to claim 3, wherein the inner part comprises catch devices (6, 7) for engagement in latches or similar elements (20, 21) on the ends of the clamping elements (18, 19).

5. A side box (1) according to any of claims 2 to 4, wherein the at least one clamping element (18, 19) has a belt-like shape.

6. A side box (1) according to claim 5, wherein the at least one clamping element (18, 19) is of plastics material, in which at least one steel wire is incorporated.

7. A side box (1) according to any of claims 1 to 6, wherein the middle part (4) has a reinforcement.

8. A side box (1) according to claim 7, wherein the reinforcement is in the form of a wire rope mesh or woven fabric.

9. A side box (1) according to any of claims 1 to 7, wherein the inner part (2) comprises a substantially rigid plastics material shell.

10. A side box (1) according to any of claims 1 to 9, wherein the outer part (3) is made of an elastic material but stiffer than the middle part (4).

11. A side box (1) according to any of claims 1, wherein the middle part is made of a textile material.

12. A side box (1) according to any of claims 1 to 11, wherein the outer part (3) is made of a textile material.

13. A side box (1) according to any of claims 1 to 12, wherein the middle part (4) is pivotably connected to the inner part (2) by a hinge.

14. A side box (1) according to any of claims 1 to 12, wherein a reinforcing element (15, 17) on an outer side of the outer-part (3) externally surrounds the outer part (3) like a clamp.

15. A side box (1) according to claim 14, wherein the reinforcing element (15 - 17) is connect ed to the inner part (2) by at least one hinge.

16. A side box (1) according to claim 14 or claim 15, wherein the reinforcing element (15 - 17) has two belt-like portions (15, 16) which extend from an underside of the outer part (3) up to a top of the outer part (3).

17. A side box (1) according to claim 16, wherein the two belt-like portions (15, 16), as seen from the middle part (4), are concave and form channels into each of which a clamping element (18, 19) is inserted.

18. A side box (1) according to claim 17, wherein latches or similar elements (20, 21) are provided on the ends of the clamping elements (18, 19) projecting from the channels formed by the belt-like portions (1 5, 16) and are engageable in the catch devices (6, 7) on the inner part (2).

19. A side box (1) according to any of claims 14 to 18, wherein the reinforcing element (15 - 17) has a belt-like portion which extends forwards from a back to a front of the outer part (3) transversely of the other two belt-like portions (15, 16).

20. A side box (1) according to any of claims 14 to 19, wherein the belt-like portions (15 - 17) are of plasti cs material.

21. A side box (1) according to any of claims 16 to 20, wherein the belt-like portions (15 - 17) are stiffer than th e outer part (3).

## Revendications

1. Coffre latéral (1) pour un deux roues comportant :
- une partie intérieure de coffre (2) tournée vers le deux roues à l'état monté,
- une partie extérieure de coffre (3) qui, à l'état monté n'est pas tournée contre le deux roues et qui bascule par rapport à la partie intérieure (2) du coffre latéral pour l'ouvrir et le fermer, et entre la partie intérieure (2) et la partie extérieure (3) il y a une partie intermédiaire (4) en matière souple,
**caractérisé en ce que**
le coffre latéral est un coffre de moto, et
les parties intérieure (2) et extérieure (3) du coffre ont une forme de coquille.

2. Coffre latéral (1) selon la revendication 1,
selon lequel
à l'état fermé, la partie extérieure (3) du coffre est serrée contre la partie intérieure (2) par au moins un élément tendeur (18, 19), et
au moins cet élément tendeur (18, 19) s'étend de la partie extérieure du coffre (3) par-dessus la partie intermédiaire (4) jusque vers la région supérieure de la partie intérieure (2).

3. Coffre latéral (1) selon la revendication 2,
comportant
un élément tendeur avant et arrière (18, 19).

4. Coffre latéral (1) selon la revendication 3,
dans lequel
la partie intérieure (2) comporte des moyens d'encliquetage (6, 7) dans lesquels s'accrochent des éléments en forme de lame (20, 21) prévus aux extrémités des éléments de serrage (18, 19).

5. Coffre latéral (1) selon l'une des revendications 2 à 4,
dans lequel
au moins un élément tendeur (18, 19) a une forme de ceinture.

6. Coffre latéral (1) selon la revendication 5,
dans lequel
au moins un élément tendeur (18, 19) est en matière plastique et au moins un câble en acier est intégré dans la matière plastique.

7. Coffre latéral (1) selon l'une des revendications 1 à 6,
dans lequel
la partie intermédiaire (4) du coffre comporte une armature.

8. Coffre latéral (1) selon la revendication 7,
dans lequel
l'armature est formée par un tissu de câble d'acier ou une trame de câble d'acier.

9. Coffre latéral (1) selon l'une des revendications 1 à 7,
dans lequel
la partie intérieure (2) du coffre se compose principalement d'une coquille rigide en matière plastique.

10. Coffre latéral (1) selon l'une des revendications 1 à 9,
dans lequel
la partie extérieure (3) du coffre est en une matière élastique mais toutefois plus rigide que la partie intermédiaire (4).

11. Coffre latéral (1) selon la revendication 1,
dans lequel
la partie intermédiaire est en matière textile.

12. Coffre latéral (1) selon l'une des revendications 1 à 11,
dans lequel
la partie extérieure (3) du coffre est en textile.

13. Coffre latéral (1) selon l'une des revendications 1 à 12,
selon lequel
la partie intermédiaire (4) du coffre est reliée par une charnière basculante à la partie intérieure (2).

14. Coffre latéral (1) selon l'une des revendications 1 à 12,
selon lequel
le côté extérieur de la partie extérieure (3) du coffre comporte un élément de renforcement (15, 17) qui l'entoure de l'extérieur à la manière d'une pince.

15. Coffre latéral (1) selon la revendication 14,
dans lequel
l'élément de renforcement (15, 17) est relié par au moins une charnière à la partie intérieure (2) du coffre.

16. Coffre latéral (1) selon l'une quelconque des revendications 14 ou 15,
selon lequel
l'élément de renforcement (15, 17) se compose de deux segments en forme de ceinture (15, 16) qui s'étendent de la face inférieure de la partie extérieure (3) du coffre vers le haut jusqu'au côté supérieur de la partie extérieure (3).

17. Coffre latéral (1) selon la revendication 16,
selon lequel
les deux segments (15, 16) en forme de ceinture, sont concaves lorsqu'on regarde de la partie intermédiaire de coffre (4) et forment des canaux de réception recevant chacun l'un des éléments tendeurs (18, 19).

18. Coffre latéral (1) selon la revendication 17,
selon lequel
les extrémités des éléments tendeurs (18, 19) qui viennent en saillie des canaux de réception formés par des segments (15, 16) analogues à des ceintures, comportent des éléments en forme de lame (20, 21) qui s'accrochent dans des moyens d'encliquetage (6, 7) de la partie intérieure (2) du coffre.

19. Coffre latéral (1) selon l'une des revendications 14 à 18,
selon lequel
l'élément de renforcement (15, 17) présente un segment analogue à une ceinture s'étendant transversalement aux autres segments (15, 16) en forme de ceinture à partir du côté arrière vers le côté avant de la partie extérieure (3) du coffre, en étant dirigés vers l'avant.

20. Coffre latéral (1) selon l'une des revendications 14 à 19,
dans lequel
les segments en forme de ceinture (15, 17) sont en matière plastique.

21. Coffre latéral (1) selon l'une des revendications 16 à 20,
selon lequel
les segments analogues à une ceinture (15, 17) sont plus rigides que la partie extérieure (3) du coffre.
